# EUROPEAN PATENT SPECIFICATION

(11) **EP 2 705 338 B1**
(45) Date of publication and mention of the grant of the patent: **09.03.2022**
(21) Application number: 12723224.7
(22) Date of filing: 03.05.2012
(51) Int. Cl.: G01J 3/44, G01N 21/65

(54) **ESTIMATION OF BACKGROUND RADIATION IN SPECTRAL DATA BY POLYNOMIAL FITTING**
SPEKTROSKOPISCHE VORRICHTUNG UND VERFAHREN
APPAREIL ET MÉTHODES SPECTROSCOPIQUES

(30) Priority: 05.05.2011 EP 11250504; 19.01.2012 GB 201200966
(43) Date of publication of application: 12.03.2014
(73) Proprietor: Renishaw Plc., Wotton-Under-Edge, Gloucestershire GL12 8JR (GB)
(72) Inventor: SMITH, Brian John Edward, Wotton-under-Edge Gloucestershire GL12 8JR (GB)
(74) Representative: Matthews, Paul
(86) International application number: PCT/GB2012/000405
(87) International publication number: WO 2012/150434

(56) References cited:
- ZHAO J, LUI H, MCLEAN DI, ZENG H: "Automated autofluorescence background subtraction algorithm for biomedical Raman spectroscopy", APPLIED SPECTROSCOPY, vol. 61, no. 11, 2007, pages 1225-1232, XP002660247,
- CHAD A. LIEBER AND ANITA MAHADEVAN-JANSEN: "Automated Method for Subtraction of Fluorescence from Biological Raman Spectra", APPLIED SPECTROSCOPY, vol. 47, no. 11, 2003, pages 1363-1367, XP002660248,
- LAN: "Automatic baseline correction of infrared spectra", CHINESE OPTICS LETTERS, vol. 5, no. 10, 1 January 2007 (2007-01-01), page 613, XP055008402, ISSN: 1671-7694
- JUWHAN LIU AND JACK L KOENIG: "A New Baseline Correction Algorithm Using Objective Criteria", APPLIED SPECTROSCOPY, THE SOCIETY FOR APPLIED SPECTROSCOPY. BALTIMORE, US, vol. 41, no. 3, 1 January 1987 (1987-01-01), pages 447-449, XP007908640, ISSN: 0003-7028, DOI: 10.1366/0003702874449110

## Description

### Field of the Invention

This invention relates to spectroscopic apparatus and methods. It is particularly useful in Raman spectroscopy, though it can also be used in other forms of spectroscopy, e.g. narrow-line photoluminescence, fluorescence, cathode-luminescence, UV visible (UV Vis), nuclear magnetic resonance (NMR), mid infra-red (mid-IR) or near infra-red (NIR).

### Background to the Invention

The Raman Effect is the inelastic scattering of light by a sample. In Raman Spectroscopy, a sample is irradiated by monochromatic laser light and the scattered light is then dispersed by a dispersive device, such as a diffraction grating, e.g. in a monochromator, to generate a spectrum called a Raman spectrum. The Raman spectrum is detected by a detector such as a charge-coupled device (CCD). Examples of Raman spectroscopy apparatus are known from US Patents Nos. 5,442,438 and 5,510,894.

Different chemical compounds have different characteristic Raman spectra. Accordingly, the Raman effect can be used to analyse chemical compounds present in a sample.

The detected spectrum comprises the Raman spectrum together with a background signal whose intensity, particularly for biological samples, is orders of magnitude greater than the Raman spectrum. This background signal is typically due to, amongst other things, the substrate supporting the sample, fluorescence and an objective lens of the Raman apparatus. To analyse the Raman spectrum it is often first necessary to identify a proportion of the detected spectrum that can be attributed to background sources.

B. D. Beier and A. J. Berger, The Royal Society of Chemistry, 2009, 134, 1198-1202 discloses a method for automating the removal of background from a Raman signal using a polynomial fitting technique and a reference spectrum of a known spectral contaminant. In the example described, glass of a microscope slide is the known contaminant.

The method comprises an iterative algorithm wherein, to start with, an estimate of the background component is set as the detected spectrum. An initial estimate is made of the concentration of the known contaminant and a polynomial is fitted to the residual between the estimated background and the estimated contribution made by the known contaminant. The polynomial and the estimated contribution of the known contaminant form together a current estimate of the background. A new estimate of the background for the next iteration is determined by comparing the current estimate to the previous estimate of the background and retaining the minimum value at each wavenumber.

Zhao J, Lui H, McLean DI, Zeng H, "Automated autofluorescence background subtraction algorithm for biomedical Raman spectroscopy", Applied Spectroscopy, vol. 61, no. 11, 2007, pages 1225-1232, discloses an automated algorithm for fluorescence removal by polynomial fitting. The algorithm uses an iterative process, wherein the major peak regions are identified in the first iteration only. A reconstruction model *Oᵢ* is calculated as an input to the next iteration by reassigning data points that are a specified deviation *DEVᵢ* above the fitted polynomial *Pᵢ* a new value *Pᵢ*+ *DEVᵢ.*

Chad A. Leiber and Anita Mahadevan-Jansen, "Automated Method for Subtraction of Fluorescence from Biological Raman Spectra", Applied Spectroscopy, vol. 47, no. 11, 2003, pages 1363-1367, discloses an automated method for fluorescence subtraction based on a modification to least-squares polynomial curve fitting. The method comprises reassigning the values of data points based upon a polynomial fit.

Lan, "Automatic baseline correction of infrared spectra", Chinese Optic Letters, vol. 5, no. 10, page 613 discloses an automatic algorithm for baseline correction of infrared (IR) spectral signals.

Juwhan Liu and Jack L Koenig, "A New Baseline Correction Algorithm Using Objective Criteria", Applied Spectroscopy, The Society for Applied Spectroscopy, vol. 41, no. 3, pages 447-449, discloses either the whole range or each section of a spectrum is fitted to a linear line or a quadratic curve. Once a least-squares fitting is done, those points are rejected whose values are a standard error of estimate or more above the line. Fitting is performed again with the remaining data points only. The procedure is repeated until the changes in the estimated parameters are within some preset tolerances or until the remaining number of data points is less than *k*+*l* parameters used for fitting a spectral model to the spectral data.

It is desirable to have a technique for automatically estimating the background that does not require knowledge of spectral components that contribute to the background.

### Summary of Invention

According to a first aspect of the invention there is provided a method of estimating background radiation in spectral data according to claim 1.

The polynomial tends to be fitted much more closely to the slowly varying spectrum of the background than the sudden spikes of the Raman spectrum of the sample. Accordingly, removing data points of the reference data or spectral data that are more than the allowable deviation above the polynomial may remove the sharp Raman spectrum from the reference data whilst retaining the more slowly varying background components. In this way, it may not be necessary to make assumptions about contaminants in order to estimate the background.

The allowable deviation is based upon an estimate of noise in the reference data. Noise is fluctuations in the spectral data that are relatively small compared to other features of the background, such as spectral features of the substrate and objective lens and fluorescence, and the Raman spectra of the sample. Such noise may be generated by, amongst other things, electronic noise in the photo-detector and processing circuitry. The estimate of noise is estimated from the reference data. The noise may be estimated from an average variation, such as an RMS variation, between each point of the reference data and its nearest neighbour(s) or an average variation, such as an RMS variation, between each local minimum of the reference data and its nearest neighbours (local minimum in the sense that the point is less than both of its neighbours). Alternatively, the estimate of noise may be based upon a deviation of the reference data from the polynomial/estimate of background radiation. Estimates of noise based upon the spectral data may overestimate the noise because of the presence of the Raman peaks. At least a proportion of the contribution from the Raman peaks has been clipped in order to form the reference data, and therefore, estimates of noise based upon the reference data may be more accurate. Preferably, a final/true estimate of noise is made using the reference data provided by the final iteration.

This final/true estimate of noise may be used in further analysis of the spectral data, for example when identifying the Raman spectra/spectrum present in the spectral data. For example, the estimate of noise may be used in an assessment of a fit of a model of Raman spectra to the spectral data.

Clipping of data point in the invention comprises decimating, ie removing, data points from the reference data or spectral data. In an alternative arrangement not in accordance with the invention, clipping of data points comprises setting the data points to a specified value above the polynomial, preferably, a value M x the average deviation above the polynomial.

The termination criterion may be when no data point are removed in an iteration. Additionally or alternatively, the termination criterion may comprise a maximum number of iterations.

In one embodiment, the reference data may initially be set equal to the spectral data. However, in other embodiments, a certain level of pre-processing may be carried out on the spectral data.

The method may comprise determining an order of polynomial to fit to the reference data.

The method may comprise generating estimates of background radiation of the spectral data, each estimate based upon fitting a different order polynomial to the spectral data, and selecting an order of polynomial to use for estimating background radiation and/or one of the estimates of the background radiation based upon a fitting criterion applied to the fitting of the different order polynomials.

The method automatically searches for a most suitable order polynomial for use in generating an estimate of background radiation in accordance with the fitting criterion. In this way, the "best" order polynomial in accordance with the fitting criterion is used for estimating the background.

The method may comprise fitting of the polynomials to reference data corresponding to the spectral data clipped to remove spectral components of interest, the fitting criterion corresponding to a measure of fit of the polynomial to the reference data.

The method may comprise generating estimates of the background radiation until the fitting criterion is or is not met. The order of the polynomial and/or estimate selected may be based upon the order of polynomial that caused the generation of estimates to be terminated.

Alternatively, terminating the generation of estimates may be based on criterion separate from the fitting criterion, the generated estimates then being searched based upon the fitting criterion to select the order of polynomial to use for estimating background radiation and/or one of the estimates of the background radiation.

The order of polynomial and/or estimate may be selected based on the highest order polynomial used for generating estimates whose fitting meets the fitting criterion.

In one embodiment, the method of generating each estimate is an iterative method, such as in accordance with the first aspect of the invention.

The fitting criterion may be a number, typically a maximum number, of iterations required before the iterative method terminates. For example, different order polynomials may be fitted to the spectral data to find a highest order polynomial that can be fitted to the spectral data within a set number of iterations. This may act as a measure of the stability of fit.

The fitting criterion may comprise a statistical significance of a highest order polynomial coefficient of a fitted polynomial. The method may comprise determining the statistical significance of a highest order polynomial coefficient used to generate an estimate and generating an estimate using a higher or a lower polynomial order based upon the determined statistical significance. For example, an estimate may be generated by fitting a polynomial of order, n, to the spectral data, deleting the highest order term in the fitted polynomial and determining whether there is a statistically significant difference between the fit of the polynomial to the estimate with and without the highest order term. If there is a statistical significant difference then an estimate is generated using a higher order polynomial, such as n+1. However, if there is no statistical significant difference then an estimate is generated using a lower order polynomial, such as n-1. These steps may be repeated until a sequence of increasing or a sequence of decreasing an order of the polynomial ends (because the highest order term is no longer statistically significant in the case of a sequence of increasing polynomial order or because the highest order term is statistically significant in the case a sequence of decreasing polynomial order). The statistical significance of the highest order term may be determined based upon an estimate of noise in the spectral data. For example, if changes in magnitude caused by the highest order term are within the estimated noise in the spectral data.

The fitting criterion may be a required distribution of the estimate relative to the fitted polynomial. For example, the fitting criterion may relate to a comparison of a local variation between the estimate and the fitted polynomial to a global variation of the estimate to the fitted polynomial. This may be a comparison of a difference between the estimate and fitted polynomial at each point to an average variation for all of the data points and whether this falls within an acceptable threshold. If there is a region, ie two or more consecutive points, where the variations are much greater than the average, then an estimate may be generated using a higher order polynomial.

According to a second aspect of the invention there is provided apparatus comprising a processor, the processor arranged to carry out the method of the first aspect of the invention.

According to a third aspect of the invention there is provided a data carrier having stored thereon instructions, which, when executed by a processor, cause the processor to carry out the method of the first aspect of the invention.

The data carrier may be a non-transient data carrier, such as volatile memory, eg RAM, non-volatile memory, eg ROM, flash memory and data storage devices, such as hard discs, optical discs, or a transient data carrier, such as an electronic or optical signal.

### Brief Description of the Drawings

Embodiments of the invention will now be described, by example only, with reference to the accompanying drawings, in which:-
Figure 1 shows apparatus according to one embodiment of the invention;
Figure 2 is a flowchart illustrating a method of estimating background radiation according to one embodiment of the invention; and
Figure 3 is a flowchart illustrating a method of identifying a polynomial order for use in estimating background radiation according to one embodiment of the invention.

### Description of Embodiments

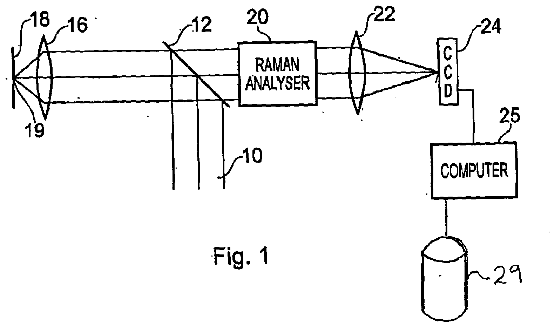

Referring to Fig. 1, apparatus according to the invention comprises a Raman spectrometer connected to a computer 25 that has access to memory 29.

The Raman spectrometer comprises an input laser beam 10 reflected through 90 degrees by a dichroic filter 12, placed at 45 degrees to the optical path. Alternatively a holographic dichroic filter may be placed at a low angle of incidence such as 10 degrees. The laser beam then passes to an objective lens 16, which focuses it to a spot at its focal point 19 on a sample 18. Light is scattered by the sample at this illuminated spot, and is collected by the objective lens 16 and collimated into a parallel beam which passes back to the dichroic filter 12. The filter 12 rejects Rayleigh scattered light having the same frequency as the input laser beam 10, and transmits the Raman scattered light. The Raman scattered light then passes to a Raman analyser 20.

The Raman analyser 20 comprises a dispersive element such as a diffraction grating. The light from the analyser 20 is focused by a lens 22 onto a suitable photo-detector. A photo-detector array is preferred. In the present embodiment the detector 24 is a charge-coupled device (CCD), which consists of a two-dimensional array of pixels, and which is connected to a computer 25 which acquires data from each of the pixels and analyses it as required. The analyser 20 produces a spectrum having various bands as indicated by broken lines 28, spread out in a line along the CCD 24.

Samples 18 may be mounted on an X-Y table so that the focal point 19 can be scanned across it in X and Y directions, e.g. under control of the computer. One spectrum is then collected for each sample.

The computer 25 is programmed with software code on a suitable medium, such as memory 29, comprising instructions, which when executed by a processor of computer 25 cause the computer 25 to perform the analysis routines described below. Alternatively, the data on the Raman spectrum/spectra obtained may be transferred to a separate computer having such software for this analysis. In either case, as the analysis proceeds, the values determined are stored in the computer concerned, and may be further processed and output or displayed to show the concentrations of the components in the sample/samples. In the case where the analysis is performed by computer 25, memory 29 has stored thereon a databank of component reference spectra to be used for the analysis. Each component reference spectrum is a typical Raman spectrum (a fingerprint) for a different chemical component or group of chemical components.

To process the spectral data to determine the Raman spectrum/spectra present and therefore, the chemical component(s) present in the sample, first the background (spectral components that are not Raman spectra of the sample) are identified and removed or factored into the analysis.

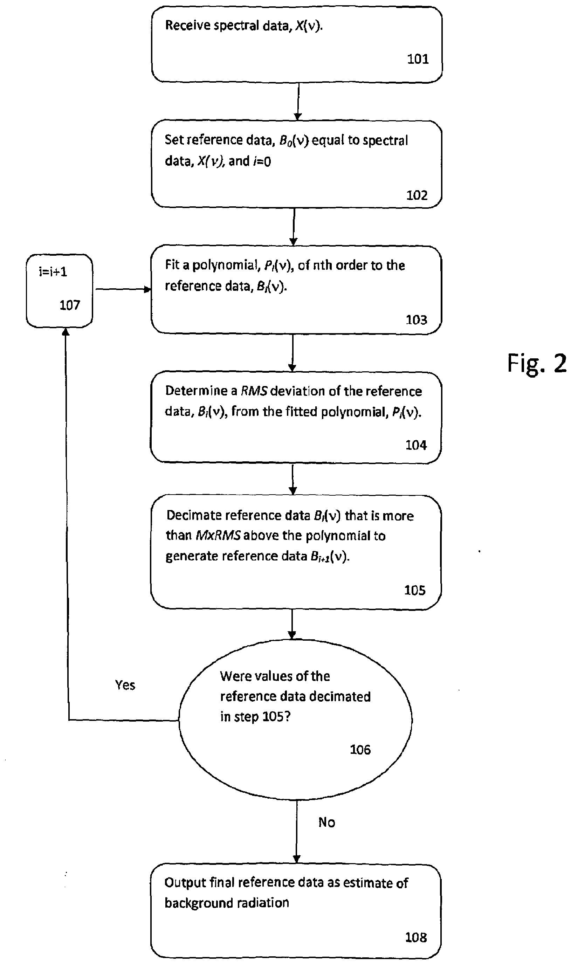

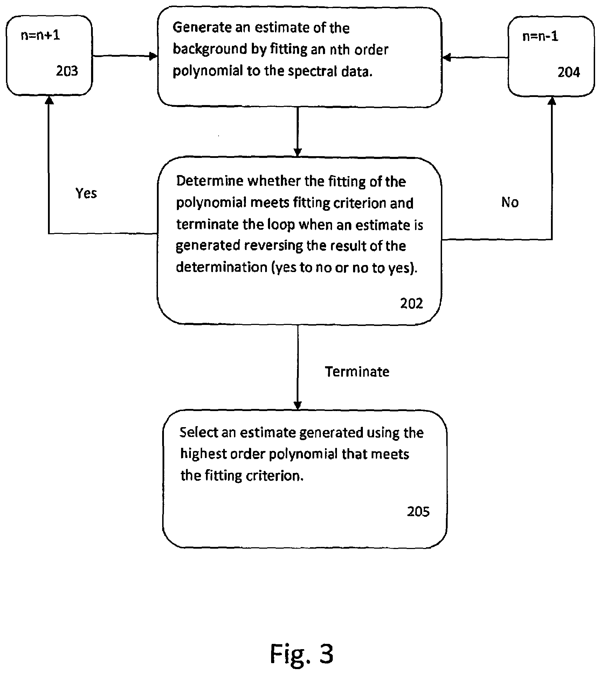

Referring to Figure 2, an estimate of the background radiation in the spectral data is automatically made using an iterative process. After receiving the spectral data, 101, reference data is initially set equal to the spectral data 102. To this reference data, an nth order polynomial is fitted 103. An order of the polynomial to be used may be preset, for example the process may be preset to be a fifth order polynomial or alternatively, as described below with reference to Figure 3, the order of the polynomial to be used for estimating the background may be determined by a suitable process.

In step 104, a deviation of each datum point of the reference data from the polynomial is determined and a root mean square (RMS) value is calculated for the deviations. The reference data is then modified, by decimating points that are more than an allowable deviation above the polynomial. In this embodiment, the allowable deviation is MxRMS, wherein M is a positive real number. M may be set by the user based upon noise in the spectral data.

In step 106, it is determined whether a termination criterion is met, in this embodiment, whether any points have been decimated in step 105. If points were removed from the reference data, the method proceeds to the next iteration, wherein a polynomial is fitted to the modified reference data. The iterative process continues until no points are decimated in step 105. In step 108, the reference data of the final iteration is output as an estimate of the background radiation.

The estimate of background radiation may be used in a technique, such as DCLS, for analysing the Raman spectra.

For use in further processing, such as in fitting of a model of Raman spectra to the spectral data, an estimate may be made of noise in the spectral data. The noise may be estimated by calculating an RMS variation between each point in the reference data provided by the final iteration.

In another embodiment, in step 105, rather than decimate the reference data, the spectral data is decimated to remove data points that are more than MxRMS above the polynomial to form the i+1th reference data to which a polynomial is fitted in step 103 of the next iteration. In this way, points of the spectral data that were removed in a previous iteration may be reintroduced. To implement such a method it may be necessary to introduce termination criteria to avoid an endless loop, such as where the same points are continuously removed and then reintroduced. In one embodiment, the termination criterion in step 106 is that the iterative process terminates after a set (maximum) number of iterations.

Referring to Figure 3, rather than presetting the order of polynomial to use in estimating the background, the order of polynomial to use may be automatically determined.

In step 201 an estimate of background radiation in spectral data is determined by fitting an nth order polynomial to the spectral data. Such an estimate is generated in the manner described with reference to Figure 2. In step 202, a determination is made as to whether the fitting of the polynomial meets a fitting criterion. Three fitting criteria are described in more detail below. If the fitting meets the fitting criterion then a further estimate is generated using an n+1th order polynomial. If the fitting does not meet the fitting criterion then an estimate is generated using an n-1th order polynomial. This process is repeated to generate a sequence of estimates using an ever increasing or decreasing order of polynomial until a fitting reverses the result of the determination. For example, for a generation of estimates using an increasing order of polynomials, the process is terminated when an estimate is generated by fitting a polynomial that fails to meet the fitting criterion. For a generation of estimates using a decreasing order of polynomials, the process is terminated when an estimate is generated by fitting a polynomial that meets the fitting criterion.

In step 205, the estimate generated using the highest order polynomial whose fitting meets the fitting criterion is selected as an estimate of the background radiation. In an alternative arrangement, the method of Figure 3 is used only for a first instance of spectral data, and the order of polynomial used to generate the selected estimate is then used for generating estimates for other spectral data. This may be suitable in situations where the nature of the background radiation is expected to be similar for different samples, such as when the samples are supported by the same substrate and Raman spectra are obtained using the same Raman spectroscopy apparatus. Use of the same order polynomial for estimating the background of a set of spectral data may be useful to give consistent analysis of a batch of spectral data (such as a batch of spectral data used to map a sample or a batch of spectral data taken of a sample over time) or in multivariate techniques that are applied to all data simultaneously where only one estimate of background can be used.

In one embodiment, the fitting criterion is a maximum number of iterations required for generating the estimate. This may act as a measure of the stability of fit.

In a further embodiment, the fitting criterion is a statistical significance of the highest order coefficient of the fitted polynomial. An estimate is generated using a polynomial of order, n, a highest order term of the polynomial fitted in the final iteration is deleted and a determination is made as to whether there is a statistically significant difference between the fit of this modified polynomial to the estimate (eg the output in step 108) relative to the unmodified polynomial. If there is a statistically significant difference then an estimate is generated using a higher order polynomial, such as n+1. However, if there is no statistically significant difference then an estimate is generated using a lower order polynomial, such as n-1. When an estimate is generated that results in a different finding in terms of the fitting criterion to the previously generated estimates, the generation of estimates is terminated. The estimate generated using the highest order polynomial that has a statistically significant highest order coefficient is used to estimate the background radiation.

In a further embodiment, the fitting criterion is a required distribution of the fitted polynomial relative to the estimate. A comparison is made of a local variation between the resolved polynomial and the estimate to a global variation of the resolved polynomial to the estimate. This may be a comparison of a difference between each point relative to an average variation for all of the data points. A determination is made as to whether this comparison falls within an acceptable threshold. If there is a region, ie two or more consecutive points, where the variations fall outside the threshold, then an estimate may be generated using a higher order polynomial.

## Claims

1. A method of estimating background radiation in spectral data, the method comprising, iteratively, fitting (103) a polynomial to reference data, determining (104) an allowable deviation of the reference data from the polynomial, the allowable deviation based upon an estimate of noise in the reference data, and decimating (105) the reference data or the spectral data by removing data points of the reference data or the spectral data that are more than the allowable deviation above the polynomial to provide the reference data for the next iteration until a termination criterion is met, wherein the reference data is initially based upon the spectral data.

2. A method according to claim 1, wherein the estimate of noise is based upon an average variation between each data point of the reference data and the data point that is a nearest neighbour to that data point.

3. A method according to claim 1, wherein the estimate of noise is based upon a deviation of the reference data from the polynomial/estimate of background radiation

4. A method according to any one of claims 1 to 3, comprising estimating a final, true, estimate of noise of the spectral data using the reference data provided by the final iteration.

5. A method according to any one of claims 1 to 4, wherein the termination criterion is met when no data points are removed in an iteration.

6. A method according to any one of claims 1 to 5, wherein the termination criterion is met when a set number of iterations are carried out.

7. A method according to any one of claims 1 to 6, comprising determining an order of polynomial to fit to the reference data.

8. Apparatus comprising a processor arranged to perform the method according to any one of the preceding claims.

9. A data carrier having instructions thereon, which, when executed by a processor, cause the processor to carry out the method of any one of claims 1 to 7.

## Patentansprüche

1. Verfahren zur Abschätzung von Hintergrundstrahlung in Spektraldaten, wobei das Verfahren umfasst: ein iteratives Anpassen (103) eines Polynoms an Referenzdaten, ein Bestimmen (104) einer zulässigen Abweichung der Referenzdaten von dem Polynom, wobei die zulässige Abweichung auf einer Schätzung des Rauschens in den Referenzdaten basiert, und ein Dezimieren (105) der Referenzdaten oder der Spektraldaten durch Entfernen von Datenpunkten der Referenzdaten oder der Spektraldaten, die mehr als die zulässige Abweichung über dem Polynom liegen, um die Referenzdaten für die nächste Iteration bereitzustellen, bis ein Abbruchkriterium erfüllt ist, wobei die Referenzdaten anfänglich auf den Spektraldaten basieren.

2. Verfahren nach Anspruch 1, wobei die Schätzung des Rauschens auf einer durchschnittlichen Abweichung zwischen jedem Datenpunkt der Referenzdaten und dem Datenpunkt basiert, der der nächste Nachbar dieses Datenpunkts ist.

3. Verfahren nach Anspruch 1, wobei die Schätzung des Rauschens auf einer Abweichung der Referenzdaten von dem Polynom/der Schätzung der Hintergrundstrahlung basiert.

4. Verfahren nach einem der Ansprüche 1 bis 3, umfassend ein Schätzen einer endgültigen, wahren Schätzung des Rauschens der Spektraldaten unter Verwendung der durch die letzte Iteration bereitgestellten Referenzdaten.

5. Verfahren nach einem der Ansprüche 1 bis 4, wobei das Abbruchkriterium erfüllt ist, wenn in einer Iteration keine Datenpunkte entfernt werden.

6. Verfahren nach einem der Ansprüche 1 bis 5, wobei das Abbruchkriterium erfüllt ist, wenn eine bestimmte Anzahl von Iterationen durchgeführt wurde.

7. Verfahren nach einem der Ansprüche 1 bis 6, umfassend ein Bestimmen einer Polynomordnung zur Anpassung an die Referenzdaten.

8. Vorrichtung mit einem Prozessor, der so angeordnet ist, dass er das Verfahren nach einem der vorhergehenden Ansprüche ausführt.

9. Datenträger mit darauf befindlichen Befehlen, die, wenn sie von einem Prozessor ausgeführt werden, den veranlassen, dass der Prozessor das Verfahren nach einem der Ansprüche 1 bis 7 ausführt.

## Revendications

1. Procédé d'estimation de rayonnement de fond dans des données spectrales, le procédé comprenant, de manière itérative, l'ajustement (103) d'un polynôme à des données de référence, la détermination (104) d'un écart admissible des données de référence par rapport au polynôme, l'écart admissible étant basé sur une estimation de bruit dans les données de référence, et la décimation (105) des données de référence ou des données spectrales en supprimant les points de données des données de référence ou des données spectrales qui sont supérieurs à l'écart admissible au-dessus du polynôme pour fournir les données de référence pour l'itération suivante jusqu'à ce qu'un critère de fin soit satisfait, où les données de référence sont initialement basées sur les données spectrales.

2. Procédé selon la revendication 1, dans lequel l'estimation de bruit est basée sur une variation moyenne entre chaque point de données des données de référence et le point de données qui est le plus proche voisin de ce point de données.

3. Procédé selon la revendication 1, dans lequel l'estimation de bruit est basée sur un écart des données de référence par rapport au polynôme/à l'estimation de rayonnement de fond.

4. Procédé selon l'une quelconque des revendications 1 à 3, comprenant l'estimation d'une estimation de bruit des données spectrales finale réelle en utilisant les données de référence fournies par l'itération finale.

5. Procédé selon l'une quelconque des revendications 1 à 4, dans lequel le critère de fin est satisfait lorsqu'aucun point de données n'est supprimé dans une itération.

6. Procédé selon l'une quelconque des revendications 1 à 5, dans lequel le critère de fin est satisfait lorsqu'un nombre déterminé d'itérations est réalisé.

7. Procédé selon l'une quelconque des revendications 1 à 6, comprenant la détermination d'un ordre de polynôme à ajuster aux données de référence.

8. Appareil comprenant un processeur agencé pour réaliser le procédé selon l'une quelconque des revendications précédentes.

9. Support de données comprenant des instructions qui, lorsqu'elles sont exécutées par un processeur, amènent le processeur à réaliser le procédé de l'une quelconque des revendications 1 à 7.
